(19)

Europäisches
Patentamt
European
Patent Office
Office européen
des brevets

(11) **EP 2 870 465 B1**

(12) **EUROPEAN PATENT SPECIFICATION**

(45) Date of publication and mention
of the grant of the patent:
**06.12.2023   Bulletin 2023/49**

(21) Application number: **13756701.2**

(22) Date of filing: **27.06.2013**

(51) International Patent Classification (IPC):
**G01N 27/18** (2006.01)          **G01N 30/66** (2006.01)
**G01N 30/88** (2006.01)

(52) Cooperative Patent Classification (CPC):
**G01N 27/18;** G01N 30/66

(86) International application number:
**PCT/IT2013/000178**

(87) International publication number:
**WO 2014/006648 (09.01.2014 Gazette 2014/02)**

(54) **THERMAL CONDUCTIVITY DETECTOR (TCD) FOR APPLICATIONS IN FAST GAS-CHROMATOGRAPHY (GC)**

WÄRMELEITFÄHIGKEITSDETEKTOR FÜR ANWENDUNGEN IN DER SCHNELLEN GASCHROMATOGRAPHIE

DÉTECTEUR DE CONDUCTIVITÉ THERMIQUE POUR APPLICATIONS EN CHROMATOGRAPHIE GAZEUSE RAPIDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:   **04.07.2012   IT RM20120311**

(43) Date of publication of application:
**13.05.2015   Bulletin 2015/20**

(73) Proprietors:
• **Consiglio Nazionale Delle Ricerche**
  **00185 Roma (IT)**
• **Pollution S.r.l.**
  **40054 Budrio (IT)**

(72) Inventors:
• **COZZANI, Enrico**
  **I-00185 Roma (IT)**
• **CARDINALI, Gian Carlo**
  **I-00185 Roma (IT)**
• **MESSINA, Marco**
  **I-00185 Roma (IT)**
• **ZAMPOLLI, Stefano**
  **I-00185 Roma (IT)**

• **ELMI, Ivan**
  **I-00185 Roma (IT)**
• **POGGI, Antonella**
  **I-00185 Roma (IT)**
• **MANCARELLA, Fulvio**
  **I-00185 Roma (IT)**

(74) Representative: **Perronace, Andrea et al**
**Jacobacci & Partners S.p.A.**
**Via Tomacelli, 146**
**00186 Roma (IT)**

(56) References cited:
**WO-A1-03/011747          WO-A2-00/58723**
**US-A1- 2005 265 422     US-A1- 2010 242 573**

• **RASTRELLO F ET AL: "Thermal Conductivity Detector for gas-chromatography: Acquisition system and experimental measurements", INSTRUMENTATION AND MEASUREMENT TECHNOLOGY CONFERENCE (I2MTC), 2012 IEEE INTERNATIONAL, IEEE, 13 May 2012 (2012-05-13), pages 1226-1230, XP032197030, DOI: 10.1109/I2MTC.2012.6229304 ISBN: 978-1-4577-1773-4**

**EP 2 870 465 B1**

**Description**

The present invention concerns a thermal conductivity detector (TCD) for fast gas-chromatographic (GC) applications.

More in detail, the present invention concerns a new Thermal Conductivity Detector (TCD) specifically suited for fast Gas Chromatographic (GC) applications. In the TCD of the invention, micro-electromechanical processing technique is used to fabricate a miniaturized device, which consists of two couples of platinum resistors put in a Wheatstone bridge configuration and suspended upon dielectric membranes at the centre of two flowing channels (reference channel and analytical channel). The novel aspect of the proposed layout design consists in locating each couple of resistors over a single dielectric membrane, in order to minimize the area occupied by the couple of resistors as a function of the gas packet length. In fact, with respect to the standard GC, the fast GC column produces shorter gas packet lengths and decreases the time between two peaks of different gas species. The proposed layout design for the innovative TCD reduces the length of the channel, so improving the capability to detect all the gas peaks out-coming from fast GC column without artifacts. Taking advantage of the proposed layout, unwanted phenomena like band broadening with overlapping of different gas peaks are avoided by using length of the area occupied by the resistors shorter than each single gas packet length: for this reason, the proposed TCD layout makes the invention device suitable for applications like fast-GC.

Moreover, the proposed solution locates the two resistors extremely close each other, so that they are subjected to the same mechanism of thermal exchange with the incoming flow (both spatially and temporally), increasing the sensitivity and accuracy of the detector.

A detector is an essential part of a gas chromatographic system. Of the various detectors that have been developed for GC instruments, the thermal conductivity detector (TCD) is probably the first and the mostly widely used detection system in general gas analysis and in environmental testing. A TCD operates on relative changes in the thermal conductivity of gas flowing through separate sample and reference cells of the TCD. A conventional TCD typically contains, in the sample and reference cells, pairs of electrically heated filaments whose temperature at constant electrical power depends upon the thermal conductivity of the surrounding gas. However, using the photolithography technique and chemical or physical deposition processes developed for fabricating microelectronics devices, TCDs which are several orders of magnitude smaller than conventional hot-wire or thermistor-bead TCDs have been developed in order to fabricate miniature GC system.

Although the TCD is not as sensitive as solute property detectors such as the flame ionization detector (FID), it is particularly suited for miniaturization. TCDs are concentration sensitive devices while detectors of higher sensitivities are mass sensitive, like the ionization detectors. As the detector size is reduced, the detector volume decreases, but the gas concentration is not greatly affected. Thus TCDs are at a large advantage in a miniature GC system compared to other types of GC detectors.

Extensive studies of conventional TCDs have been carried out and published in various books (e.g. [1]) and technical journals (e.g. [2-5]). On the other hand, few research results on micro TCDs (pTCD) fabricated using the lithography technique were published [6-10] despite the fact that silicon-based µTCDs have become commercially available since several years.

**TCD working principle**

The TCD is identified as a physical detector, since it responds to some difference in the thermal conductivity (a physical property) of a "carrier gas" caused by the presence of the eluted components.

The most common example of TCD is represented by a wire filament heated by the electrical current flowing through it: using a wire with a temperature dependent resistance, the temperature of the wire can be measured according to the well known relation:

$$R\ (T) = R_0 \times (1 + TCR \times T) \qquad\qquad (1)$$

being $TCR$ the temperature coefficient of resistance for the wire filament and $R_0$ the resistance at the reference temperature of 0°C.

If the filament is surrounded by a reference gas, small changes in gas thermal conductivity due to the presence of sample components (different from the reference gas) cause variations in temperature T, that can be detected by the change in wire filament resistance.

The TCD is commonly operated using helium or hydrogen as the carrier gas, since the thermal conductivity of these gases (respectively 0.142 W/m·K and 0.160 W/m·K @ 298K) is higher than that of all the typical solutes.

The previously described working principle of the TCD is clearly suitable for implementing a differential measurement scheme: the presence of the sample component, in fact, can be better revealed by comparing the thermal conductivity of the pure carrier gas with the thermal conductivity of the mixture represented by the carrier gas in addition with the analyte.

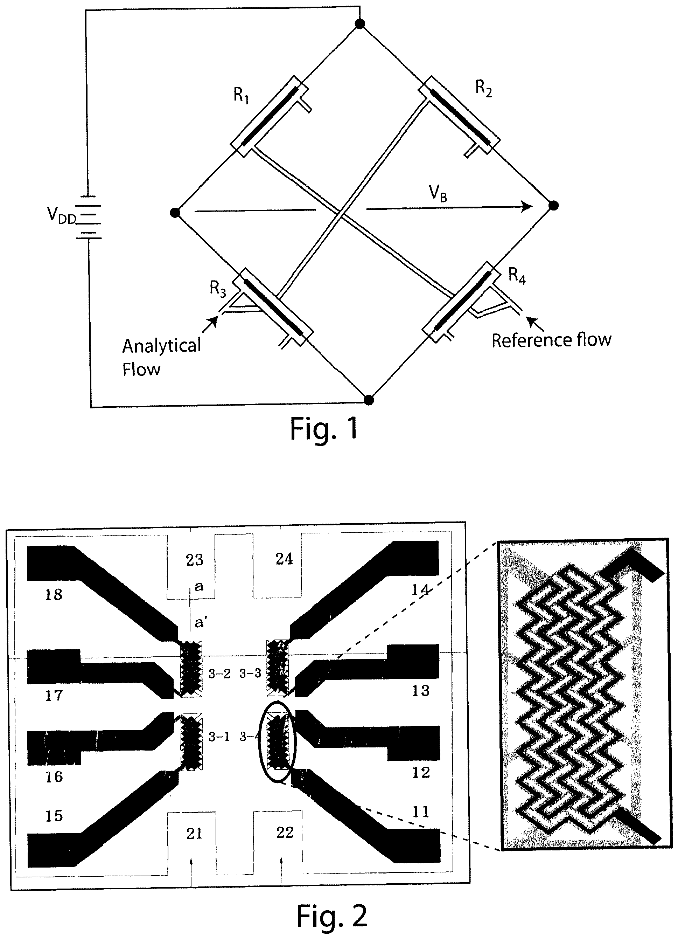

A typical arrangement of a TCD suited for environmental analysis by means of GC techniques is reported in figure 1. The TCD is formed by two couples of resistors, put in a Wheatstone bridge configuration: the pure carrier gas (reference) flow enters resistors $R_1$ and $R_4$, while the flow from analytical column (carrier gas + eluted sample component) enters resistors $R_2$ and $R_3$.

The four resistor are designed such that, in absence of sample eluted from the column, the Wheatstone bridge results balanced, that is:

$$R_1 \cdot R_4 = R_2 \cdot R_3 \qquad\qquad (2)$$

and, as a consequence, $V_B = 0$ V.

As a substance elutes from the column and enters $R_2$ and $R_3$ (together with the carrier gas), thermal conductivity of the analytical flow differs from thermal conductivity of the carrier gas that enters $R_1$ and $R_4$; for this reason, the temperature of $R_2$ and $R_3$ will differ from the temperature of $R_1$ and $R_4$ and, since a resistance is a temperature-dependent device, eq. (1) is not satisfied and a nonzero voltage measurement is obtained ($V_B \neq 0$ V), revealing the presence of the sample substance.

Here we focus on micro-fabricated TCD detectors with one sample and one reference cell made each one of a pair of resistors fabricated on suspended membranes. In the sample cell the pair of resistors is located in the flow of the carrier gas containing solutes coming from the analytical column, while in the reference cell the pair of resistors is located in the flow of the carrier gas. As carrier gas containing solutes passes through the sample cell, a change of the resistance occurs due to the change of the temperature of the resistor. A comparison is made with the resistances of the reference cell by using a Wheatstone bridge circuit. This approach is proposed in the patent TW494233. In this patent, in each cell the two resistors are fabricated on two membranes located in two near, but different positions in the flow of the gas (see Fig. 2).

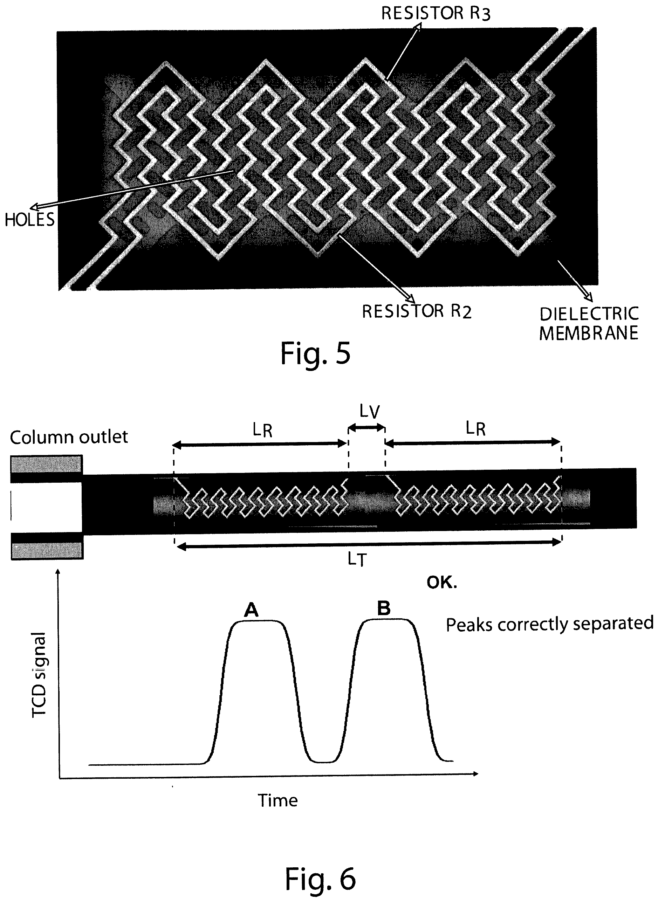

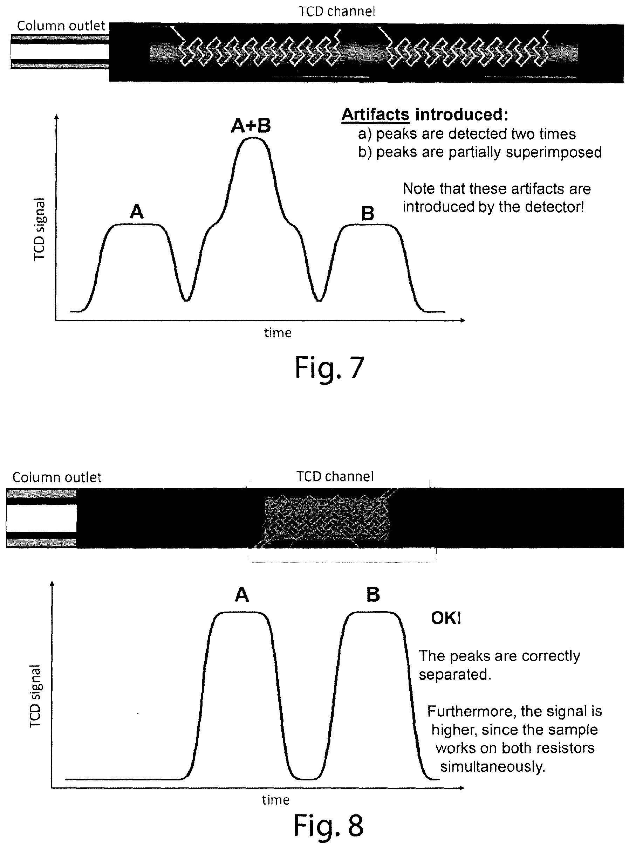

Patent document US 2010/0242573 A1 discloses a detector according to preamble of claim 1. However, the arrangement herein disclosed in detail is such that, like patent TW494233, in each cell the two resistors are fabricated on two membranes located in two near, but different positions in the flow of the gas (see e.g. Fig. 5 reported on the patent document US 2010/0242573 A1), and therefore artifacts are introduced in the measurement. Indeed, due to this very geometrical construction, artifacts are introduced (see Fig. 7):

- Peaks are detected two times;

- Peaks are partially superimposed.

It is the object of the present invention to provide a Silicon micro-machined thermal conductivity detector (TCD), in particular for fast Gas-Chromatographic (GC) applications, which solves the problems and overcomes the drawbacks of the prior art.

The present invention is defined in the claims and provide a thermal conductivity detector (TCD) for fast gas-chromatographic (GC) analysis of a gas sample composed by a carrier gas mixed with an eluted sample component, comprising:

- A reference cell through which said carrier gas flows along a reference cell direction, comprising:

  o a first resistor occupying a first resistor segment along said reference cell direction, the first resistor being sensitive to temperature and having resistance value $R_1$,
  o a fourth resistor occupying a fourth resistor segment along said reference cell direction, the fourth resistor being sensitive to temperature and having resistance value $R_4$,

- A sample cell through which said carrier gas flows along a sample cell direction, comprising:

  o a second resistor occupying a second resistor segment along said sample cell direction, the second resistor being sensitive to temperature and having resistance value $R_2$,
  o a third resistor occupying a third resistor segment along said sample cell direction, the third resistor being sensitive to temperature and having resistance value $R_3$,

the first, second, third and fourth resistors being disposed together in a Wheatstone bridge configuration, such that, in absence of said sample eluted, the Wheatstone bridge results balanced, that is $R_1 \cdot R_4 = R_2 \cdot R_3$, the thermal conductivity detector being **characterised in that:**
the position of said first resistor segment (R1) along said reference cell direction substantially coincides with the position of said fourth resistor segment (R4) along said reference cell direction;

- the position of said second resistor segment along said reference cell direction substantially coincides with the position of said third resistor segment along said reference cell direction;
- the positions of said first and fourth resistor segments along said reference cell direction is such that their total length taken up along said reference cell direction exceeds at most for the 10% the length;
- of the single first or fourth resistor segments; and
- the positions of said second and third resistor segments along said sample cell direction is such that their total length taken up along said sample cell direction exceeds at most for the 10% the length of the single second or third resistor segments.

In such geometrical arrangement, i) the two resistors of each cell are substantially located in the same position along the gas flow, so that they are subjected to the same mechanism of thermal exchange with the accuracy of the detector, and ii) the capability to detect all the gas peaks out-coming from fast GC column without artifacts is improved.

Preferably according to the invention, said first and fourth resistors are fabricated on a same suspended membrane and said second and third resistors are fabricated on a same different suspended membranes.

Preferably according to the invention, said first and fourth resistors are defined over a same suspended dielectric membrane and interdigitated, and said second and third resistors are defined over a same suspended dielectric membrane and interdigitated.

Preferably according to the invention, said first and fourth resistors are overlapped on two different metallization layers and electrically insulated by means of a passivation layer and said second and third resistors are overlapped on two different metallization layers and electrically insulated by means of a passivation layer.

The present invention further relates to a method of fast gas-chromatographic analysis of a gas sample composed by a carrier gas mixed with an eluted sample component, characterized in that the detector of the invention is used and in that the following steps are executed:

A. selecting the gas sample;
B. providing the detector of the invention with first, second, third, fourth resistor segments such that the total length of the first and fourth segment along said reference cell direction, and the total length of the second and third segment along said sample cell direction, are smaller than the length of a gas packet of the gas sample;
C. sending said gas sample in the detector;
D. measuring thermal conductivity of the gas sample.

The invention will be now described by way of illustration but not by way of limitation, with particular reference to the figures of the annexed drawings, wherein:

- figure 1 shows a typical prior art arrangement of a TCD suited for environmental analysis by means of GC techniques;
- figure 2 shows a silicon chip containing the suspended structures, surrounded by a pyrex cover forming two ultra-low-volume micro-chambers (the reference channel and the analytical channel) where the device is encapsulated, for a TCD device;
- figure 3 shows a commonly used miniaturized TCD according to patent TW494233 by Hsien Wen Ko and Li Hsu (2002), wherein each resistor of the bridge is defined over a single suspended membrane;
- figure 4 shows a layout of an embodiment of the TCD according to the present invention;
- figure 5 shows an optical micrograph of the micro-fabricated element located in one of the channels of the invention device of figure 4;
- figure 6 shows the effect of a standard GC column (i.e. not fast GC) on conventional prior art TCD;
- figure 7 shows the effect of a FAST-GC column on conventional prior art TCD, wherein artifacts appear;
- figure 8 shows the effect of a FAST-GC column on the device according to the invention, wherein artifacts are eliminated;
- figure 9 shows the most compact version of the proposed solution, wherein the two metallization layers corresponding to the two resistors of a single branch of the TCD are overlapped and electrically insulated by means of a passivation layer; and
- Fig. 10 shows the mutual position of each pair of resistors in one embodiment of the TCD according to the present invention, together with the main geometrical features.

Taking into account the electrical configuration of the four resistances in the Wheatstone bridge circuit, such a geometrical arrangement is improved according to the invention by locating the two resistors of each cell in the same position in the gas flow. In particular, the innovation provided by the layout design of the developed Thermal Conductivity Detector (TCD) consists in the definition, both for the reference channel and the analytical channel, of a couple of platinum resistors over a single suspended dielectric membrane. In this way, the area occupied by each couple of resistors as a function of the gas packet length is optimized and, as a consequence, the sensitivity and the accuracy of the detector are increased.

Moreover, the two resistors of the considered cell are subject to the same mechanism of thermal exchange with the incoming flow, both spatially and temporally, so increasing the sensitivity and accuracy of the detector.

In order to show that, consider the length of the area occupied by the resistors generating the TCD response, $L_T$: in a TCD where the resistor segments are positioned sequentially along the sample flow direction, the length $L_T$ is the sum of the length of both resistors ($L_R + L_R$), plus the void distance ($L_V$) between the two resistors.

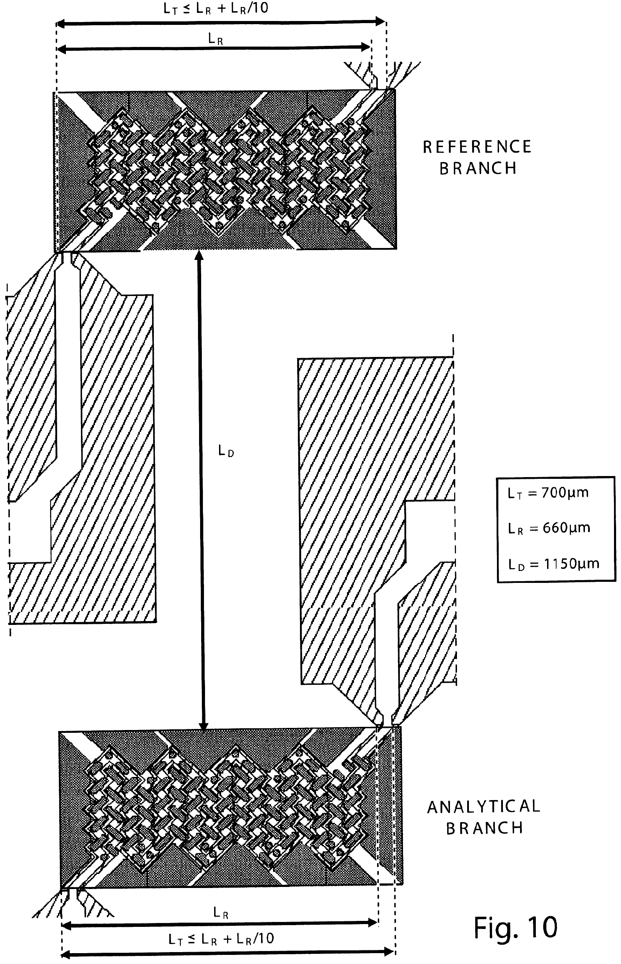

In the TCD of the present invention, where the area occupied by both resistor segments coincide, $L_T$ is at most $L_T + L_R/10$ (see Fig. 10) .

For a GC peak to be detected without artifacts, as a general rule, the length of the resistor segments $L_T$ generating the TCD response should be comparable or smaller than the length of the peak inside the TCD detector chamber, $L_P$.

The parameter $L_P$ is a function of the injection time and of the geometrical features of the GC column, as explained by the formula:

$$L_P = \frac{PD \cdot FV \cdot CCS}{TCS} \qquad (3)$$

being:

- PD the peak duration (or injection time) (sec)
- FV the flow velocity in column (m/sec)
- CCS the column cross section ($m^2$)
- TCS the TCD chamber cross section ($m^2$).

In the following, three cases of ratios between $L_R$ and $L_P$ are reported together with the expected analysis quality:

- $L_T/L_P > 1$: artifacts as described in fig. 7.
- $L_T/L_P \leq 1$: no artifacts, and a very high temporal resolution is possible (see Fig. 8).

In the following, some typical figures of STANDARD GC peaks vs. FAST-GC peaks are reported, as they are eluted into a couple of TCD sensor chambers (reference branch and analytical branch) of 0.2mm x 0.2mm cross section.

Case A) Typical peak of a standard GC analysis:

Optimal linear flow velocity in column: 350 mm/s
Column inner diameter: 350 microns
Column cross section 0.096 $mm^2$
Typical peak duration: 1 second
Peak length inside the TCD detector chamber $L_P$:

```
1s * 350mm/s * (0.096/ 0.04) = 840 mm
```

Case B) Typical FAST-GC peak:

Optimal linear flow velocity in column: 350 mm/s
Column inner diameter: 50 microns
Column cross section 0.00196 $mm^2$
Typical peak duration: 0.05 seconds
Peak length inside the TCD detector chamber $L_P$:

```
0.05s * 350mm/s * (0.00196/ 0.04) = 858 microns
```

As can be easily disclosed, in the case of a FAST-GC peak, $L_P$ is very small compared to a standard GC peak, and therefore a TCD with a $L_R$ shorter than 858 microns, as proposed in this invention, is required to acquire the signal without artifacts.

Moreover, the proposed solution ensures a reduction of the overall dimensions of the device and, as a consequence, of dead volumes, which are one of the most common sources of extra-column band broadening that affect the fast GC analysis of gaseous compounds [11] .

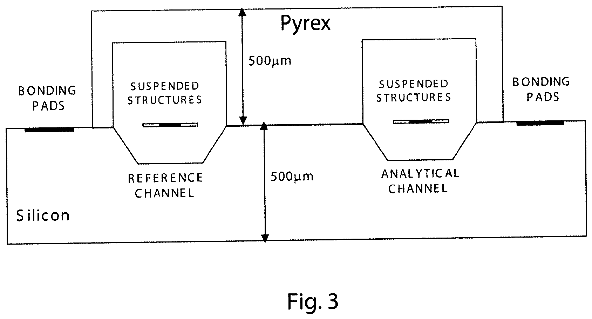

In particular, the invention micro-fabricated TCD is formed by two couples of nominally equal platinum resistors, put in a Wheatstone bridge configuration, defined over suspended dielectric membranes obtained through silicon micromachining techniques. The silicon chip containing the suspended structures is surrounded by a pyrex cover forming two ultra-low-volume micro-chambers (the reference channel and the analytical channel) where the device is encapsulated: a picture of the device cross-section is illustrated in figure 2. In the most commonly used miniaturized TCDs, each resistor of the bridge is defined over a single suspended membrane, as illustrated in figure 3 taken from the patent TW494233 by Hsien Wen Ko and Li Hsu (2002).

On the contrary, the novel aspect of the proposed TCD is represented by the fact that the device layout has been designed so that BOTH resistors of a single channel are defined over a SINGLE suspended membrane, made e.g. of a stress-compensated SiO2 - Si3N4 - SiO2 stack.

On the contrary, the novel aspect of the proposed TCD is
represented by the fact that the device layout has been designed so that
5 BOTH resistors of a single channel are defined over a SINGLE suspended
membrane, made e.g. of a stress-compensated SiO2 - Si3N4 - SiO2
stack.

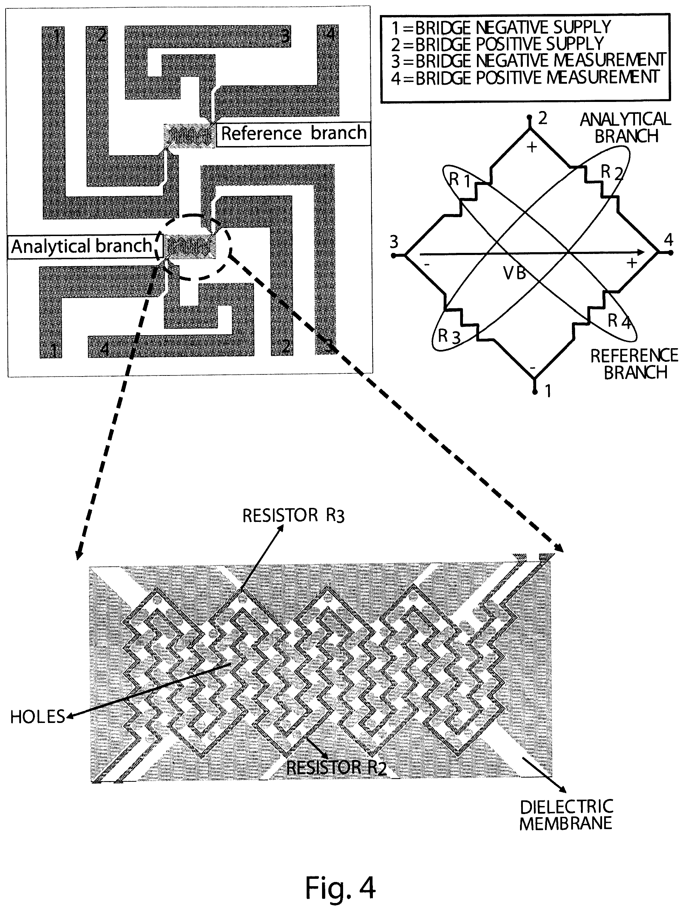

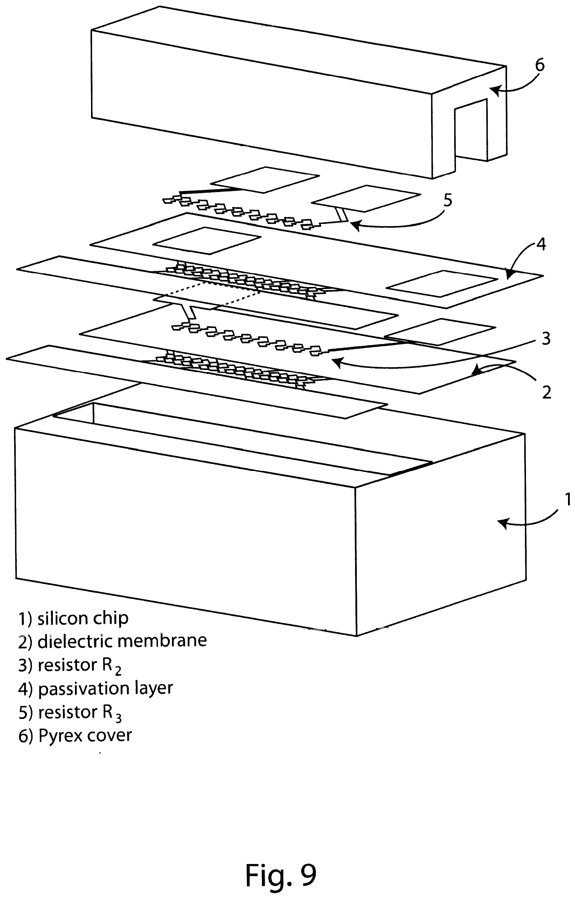

In order to achieve the target, two different solutions were adopted: in a first embodiment (see Figs. 4, 5, 10) both the two resistors of the reference channel and the two resistors of the analytical channel are interdigitated and defined by using a single metallization layer (e.g. platinum), while in a second embodiment (see Fig. 9) both the two resistors of the reference channel and the two resistors of the analytical channel are defined by using two overlapped metallization layers (e.g. platinum) electrically insulated by means of a passivation layer. In figure 9 the references are (only the analytical channel is illustrated):

1 - Silicon Chip
2 - Dielectric membrane
3 - Resistor R2 (Resistor area = 600umX170um) 20 4 - Passivation Layer
5 - Resistor R3 (Resistor Area = 600umX170um)
6 - Pyrex covering.

In any case, the length of each pair of resistors ($L_T$) as taken along the gas flow does not exceed 10% of the length of a single resistor ($L_R$), so that they are substantially located in the same position along the gas flow.

The configuration optimized by reduced length of the area occupied by the resistors contributes in eliminating artifacts induced by short gas packet, characteristic of the fast GC.

Locating the two resistors extremely close to each other makes them subjected to the same mechanism of thermal exchange with the incoming flow, both spatially and temporally, increasing the sensitivity and accuracy of the detector.

Moreover, the proposed configuration is characterized by a reduction of the overall dimensions with respect to the solution with a single resistor over a single membrane: this fact is of great advantage especially for GC applications where rapid analysis cycles are required (FAST-GC applications), since one of the mandatory issues that must be satisfied for such analysis relies on the reduction of dead volumes as much as possible.

On this purpose, Fig. 9 shows the disassembled view of the most compact version of the TCD innovative layout: this solution prefigures the deposition, over the single suspended membrane, of a first metallization layer (resistor $R_2$) followed by a passivation layer (Low Thermal Oxide, thickness ~ 1 $\mu$m) characterized by the presence of two via holes to permit the electrical connection with the bonding pads.

The presence of the passivation layer ensures the electrical insulation between resistor $R_2$ and the second metallization layer corresponding to resistor $R_3$, thus avoiding any shortcut between the two resistors of the single branch.

This configuration allows a maximal reduction of the overall dimensions of the device, since the two interdigitated resistors (defined on the same metallization layer) are replaced by two superimposed resistors (defined on two different metallization layers), so that the lateral distance between the resistors is equal to zero ($L_T = L_R$).

The different requirement for normal and fast GC are given in the following table.

| Conventional GC: | FAST-GC: |
| --- | --- |
| column length: 10 - 60 m | column length: 2 - 10 m |
| column ID: 150 - 530 um | column ID: 50 - 100 um |
| column flow: 1 - 6 sccm | column flow: 0.1 - 0.5 sccm |
| analysis cycle: 10 - 30 min | analysis cycle: 1 - 5 min |

A great advantage of the proposed TCD consists in the use of silicon micromachining techniques to fabricate, at wafer level, a miniaturized device characterized by extremely small dimensions and, as a consequence, extremely reduced dead volumes: this is an important issue for applications like fast-Gas Chromatography (fast-GC), where low flow-rates are required.

To illustrate this in greater detail, three examples are reported in figures 6-8:

- "Standard" GC column (= not FAST) on conventional TCD (figure 6);
- FAST-GC column on conventional TCD: artifacts (figure 7);
- FAST-GC column on the device according to the invention (figure 8).

The first case refers to the "state-of-the-art" of conventional GC, where the innovation of the proposed patent is not strictly necessary.
Characteristics of the column:

- The "standard" GC column works with a rather high flow rates
- The peaks have a relatively long duration.
- The temporal separation between two peaks is relatively large.

In this case the peaks are correctly separated without artifacts.

The second case refers to the more recent FAST-GC applications, and shows the problem which needs to be addressed.

Characteristics of the column:

- The FAST-GC column works with very low flow rates.
- The peaks have a very short duration.
- The temporal separation between two peaks is low.

A prior art detector with a spatial separation between the resistors is not suitable to acquire the chromatogram. Indeed, due to this very geometrical construction, artifacts are introduced:

- Peaks are detected two times;
- Peaks are partially superimposed.

In the third case, with reference to figure 8, a FAST-GC column on invention TCD is used. Characteristics of the column:

- The FAST-GC column works with very low flow rates.
- The peaks have a very short duration.
- The temporal separation between two peaks is low.

The peaks in this case are correctly separated without any artifacts.

Moreover, the reduction of overall dimensions allows very low power consumptions needed to operate the device.

The resistors of a micro-machined TCD are preferably realized in a material with the following features:

1. TCR module as large as possible;
2. good resistance to temperature during use, up to and beyond 400°C: the material should not change the electric and mechanical properties at these temperatures;
3. no irreversible chemical interaction with the sample to be analyzed (in other words "chemically inert")
4. possibility to be deposed and defined with microelectronics processes;

The TCR complying with the first requirement could be both a metal (positive TCR) and a semiconductor (negative TCR).
Many of the typical metals used in microelectronics (Al, Au, Cu) do not satisfy points 2 and 3.
The material best satisfying all the four points has been individuated in the Pt.
The preferred used gases are helium and Hydrogen since:

- both ones are optimal carrier gases typically used in GC, because they do not damage the stationary phase of the column;
- among the carrier gases typically used in GC (helium, Hydrogen and Nitrogen), only Helium and Hydrogen have a very high thermal conductivity and very different from the thermal conductivities of the typical samples to be analyzed, what maximizes the response of the del TCD.

Bibliography

[1] H.A. Daynes, "Gas Analysis by Measurement of Thermal Conductivity", Cambridge University Press, Cambridge, Great Britain, pp. 1-302 (1933).
[2] W.A. Wiseman, "Katharometer behavior", Ann. N.Y. Acad. Sci. 72, pp. 685-697 (1959).
[3] D.M. Rosie, "Quantization of thermal conductivity detectors", J.Chromatogr. Sci. 11, pp. 237-250 (1973).
[4] J. Sevcik, "Detectors in gas chromatography", J. Chromatogr. Library 4, pp. 39-58 (1976).
[5] Y. Huang, H.H. Bau, "The effects of forced convection on the power dissipation of constant-temperature thermal conductivity sensors", ASME J. Heat Transfer 119, pp. 30-37 (1997).
[6] S.C. Terry, J.H. Jerman, J.B. Angell, "A gas chromatographic air analyzer fabricated on a silicon wafer", IEEE Trans. Electr. Devices ED-26 (12), pp. 1880-1886 (1979).
[7] Wu Y E, Chen K, Chen C W and Hsu K H, "Fabrication and characterization of thermal conductivity detectors (TCDs) of different flow channel and heater designs", Sensors & Actuators A 100, pp. 37-45 (2002).
[8] Cruz D, Chang J P, Showalter S K, Gelbrad F, Manginell R P and Blain M G, "Microfabricated thermal conductivity detector for the micro-ChemLab", Sensors & Actuators B 121, pp. 414 - 422 (2007).
[9] J. A. Dziuban, J. Mroz, M. Szczygielska, A. Gorecka-Drzazga, R. Walczak, W. Bula, D. Zalewzki, L. Nieradko, J. Lysko, J. Koszur, P. Kowalski, "Portable gas chromatograph with integrated components", Sensors & Actuators A 115, pp. 318-330 (2004).
[10] B. C. Kaanta, H. Chen, X. Zhang, "Effect of forced convection on thermal distribution in micro thermal conductivity detectors", J. Micromech. Microeng 21, pp. 1-8 (2011).
[11] V. R. Reid, R. E. Synovec, "High-speed gas chromatography: The importance of instrumentation optimization and the elimination of extra-column band broadening", Talanta 76, pp. 703-717 (2008).

**Claims**

1. Thermal conductivity detector (TCD) for fast gas-chromatographic (GC) analysis of a gas sample composed by a carrier gas mixed with an eluted sample component, comprising:

   - A reference cell through which said carrier gas flows along a reference cell direction, comprising:

      o a first resistor ($R_1$) occupying a first resistor segment along said reference cell direction, the first resistor being sensitive to temperature and having resistance value $R_1$,
      o a fourth resistor ($R_4$) occupying a fourth resistor segment along said reference cell direction, the fourth resistor being sensitive to temperature and having resistance value $R_4$,

   - A sample cell through which said carrier gas flows along a sample cell direction, comprising:

      o a second resistor ($R_2$) occupying a second resistor segment along said sample cell direction, the second resistor being sensitive to temperature and having resistance value $R_2$,

o a third resistor ($R_3$) occupying a third resistor segment along said sample cell direction, the third resistor being sensitive to temperature and having resistance value $R_3$,

the first, second, third and fourth resistors being disposed together in a Wheatstone bridge configuration, such that, in absence of said sample eluted, the Wheatstone bridge results balanced, that is $R_1 \cdot R_4 = R_2 \cdot R_3$, the thermal conductivity detector being **characterised in that:**

- the position of said first resistor segment ($R_1$) along said reference cell direction substantially coincides with the position of said fourth resistor segment (R4) along said reference cell direction;
- the position of said second resistor segment along said reference cell direction substantially coincides with the position of said third resistor segment along said reference cell direction;
- the positions of said first and fourth resistor segments along said reference cell direction is such that their total length taken up along said reference cell direction exceeds at most for the 10% the length of the single first or fourth resistor segments; and
- the positions of said second and third resistor segments along said sample cell direction is such that their total length taken up along said sample cell direction exceeds at most for the 10% the length of the single second or third resistor segments.

2. Detector according to claim 1, **characterised in that** said first and fourth resistors ($R_1,R_4$) are defined over a same suspended dielectric membrane and interdigitated, and said second and third resistors ($R_2,R_3$) are defined over a same suspended dielectric membrane and interdigitated.

3. Detector according to claim 1, **characterised in that** said first and fourth resistors ($R_1,R_4$) are overlapped on two different metallization layers and electrically insulated by means of a passivation layer and said second and third resistors ($R_2,R_3$) are overlapped on two different metallization layers and electrically insulated by means of a passivation layer.

4. Method of fast gas-chromatographic (GC) analysis of a gas sample composed by a carrier gas mixed with an eluted sample component, **characterized in that** the detector of any one claim 1 to 3 is used and **in that** the following steps are executed:

A. selecting the gas sample;
B. providing the detector of the invention with first, second, third, fourth resistor ($R_1, R_2, R_3, R_4$) segments such that the total length of the first and fourth segment along said reference cell direction, and the total length of the second and third segment along said sample cell direction, are smaller than the length of a gas packet of the gas sample;
C. sending said gas sample in the detector;
D. measuring thermal conductivity of the gas sample.

**Patentansprüche**

1. Wärmeleitfähigkeitsdetektor (TCD) für die schnelle gaschromatographische (GC) Analyse einer Gasprobe, bestehend aus einem Trägergas gemischt mit einer eluierten Probenkomponente, umfassend:

- eine Referenzzelle, durch die das Trägergas entlang einer Referenzzellenrichtung strömt, umfassend:

o einen ersten Widerstand ($R_1$), der ein erstes Widerstandssegment entlang der Referenzzellenrichtung einnimmt, wobei der erste Widerstand temperaturempfindlich ist und einen Widerstandswert $R_1$ aufweist,
o einen vierten Widerstand ($R_4$), der ein viertes Widerstandssegment entlang der Referenzzellenrichtung einnimmt, wobei der vierte Widerstand temperaturempfindlich ist und einen Widerstandswert $R_4$ aufweist,

- eine Probenzelle, durch die das Trägergas, gemischt mit einer eluierten Probe, entlang einer Probenzellenrichtung strömt, umfassend:

o einen zweiten Widerstand ($R_2$), der ein zweites Widerstandssegment entlang der Probenzellenrichtung einnimmt, wobei der zweite Widerstand temperaturempfindlich ist und einen Widerstandswert $R_2$ aufweist,
o einen dritten Widerstand ($R_3$), der ein drittes Widerstandssegment entlang der Probenzellenrichtung einnimmt, wobei der dritte Widerstand temperaturempfindlich ist und einen Widerstandswert $R_3$ aufweist,

wobei der erste, zweite, dritte und vierte Widerstand zusammen in einer Wheatstone-Brückenkonfiguration angeordnet sind, sodass, wenn die Probe nicht eluiert wird, die Wheatstone-Brücke ausgeglichen ist, das bedeutet $R_1 \cdot R_4 = R_2 \cdot R_3$, wobei der Wärmeleitfähigkeitsdetektor **dadurch gekennzeichnet ist, dass**:

- die Position des ersten Widerstandssegments (R1) entlang der Referenzzellenrichtung im Wesentlichen mit der Position des vierten Widerstandssegments (R4) entlang der Referenzzellenrichtung übereinstimmt; und
- die Position des zweiten Widerstandssegments entlang der Referenzzellenrichtung im Wesentlichen mit der Position des dritten Widerstandssegments entlang der Referenzzellenrichtung übereinstimmt; und
- die Positionen der ersten und vierten Widerstandssegmente entlang der Referenzzellenrichtung derart sind, dass ihre Gesamtlänge entlang der Referenzzellenrichtung höchstens 10 % der Länge des einzelnen ersten oder vierten Widerstandssegments übersteigt; und
- die Positionen der zweiten und dritten Widerstandssegmente entlang der Probenzellenrichtung derart sind, dass ihre Gesamtlänge entlang der Probenzellenrichtung höchstens 10 % der Länge des einzelnen zweiten oder dritten Widerstandssegments übersteigt.

2. Detektor nach Anspruch 1, **dadurch gekennzeichnet, dass** der erste und der vierte Widerstand ($R_1$, $R_4$) über einer gleichen aufgehängten dielektrischen Membran definiert sind und ineinandergreifen, und dass der zweite und dritte Widerstand ($R_2$, $R_3$) über einer gleichen aufgehängten dielektrische Membran definiert sind und ineinandergreifen.

3. Detektor nach Anspruch 1, **dadurch gekennzeichnet, dass** der erste und vierte Widerstand ($R_1$, $R_4$) auf zwei verschiedenen Metallisierungsschichten überlappen und mittels einer Passivierungsschicht elektrisch isoliert sind und der zweite und dritte Widerstand ($R_2$, $R_3$) auf zwei verschiedenen Metallisierungsschichten überlappen und mittels einer Passivierungsschicht elektrisch isoliert sind.

4. Verfahren zur schnellen gaschromatographischen (GC) Analyse einer Gasprobe, die aus einem Trägergas gemischt mit einer eluierten Probenkomponente besteht, **dadurch gekennzeichnet, dass** der Detektor nach einem der Ansprüche 1 bis 3 verwendet wird und dass die folgenden Schritte ausgeführt werden:

A. Auswählen der Gasprobe;
B. Bereitstellen des Detektors nach einem der Ansprüche 1 bis 3 mit einem ersten, zweiten, dritten und vierten Widerstandssegment ($R_1$, $R_2$, $R_3$, $R_4$), sodass die Gesamtlänge des ersten und vierten Segments entlang der Referenzzellenrichtung und die Gesamtlänge des zweiten und dritten Segments entlang der Probenzellenrichtung kleiner sind als die Länge eines Gaspakets der Gasprobe;
C. Senden der Gasprobe an den Detektor;
D. Messen der Wärmeleitfähigkeit der Gasprobe.

**Revendications**

1. Détecteur à conductivité thermique (TCD) destiné à l'analyse par chromatographie gazeuse (GC) rapide d'un échantillon de gaz composé d'un gaz porteur mélangé à un composant d'échantillon élué, comprenant :

- une cellule de référence, à travers laquelle ledit gaz porteur s'écoule selon une direction de cellule de référence, comprenant :

o une première résistance ($R_1$) occupant un premier segment de résistance selon ladite direction de cellule de référence, la première résistance étant thermosensible et ayant une valeur de résistance $R_1$,
o une quatrième résistance ($R_4$) occupant un quatrième segment de résistance selon ladite direction de cellule de référence, la quatrième résistance étant thermosensible et ayant une valeur de résistance $R_4$,

- une cellule d'échantillon à travers laquelle ledit gaz porteur, mélangé à un échantillon élué, s'écoule selon une direction de cellule d'échantillon, comprenant :

o une deuxième résistance ($R_2$) occupant un deuxième segment de résistance selon ladite direction de cellule d'échantillon, la deuxième résistance étant thermosensible et ayant une valeur de résistance $R_2$,

o une troisième résistance ($R_3$) occupant un troisième segment de résistance selon ladite direction de cellule d'échantillon, la troisième résistance étant thermosensible et ayant une valeur de résistance $R_3$,

les première, deuxième, troisième et quatrième résistances ($R_1$, $R_2$, $R_3$, $R_4$) étant disposées ensemble en une configuration en pont de Wheatstone, de sorte qu'en l'absence dudit échantillon élué, le pont de Wheatstone est équilibré, c'est-à-dire $R_1 \cdot R_4 = R_2 \cdot R_3$, le détecteur à conductivité thermique **se caractérisant :**

- **en ce que** la position dudit premier segment de résistance (R1) selon ladite direction de cellule de référence coïncide sensiblement avec la position dudit quatrième segment de résistance (R4) selon ladite direction de cellule de référence ; et
- **en ce que** la position dudit deuxième segment de résistance selon ladite direction de cellule de référence coïncide sensiblement avec la position dudit troisième segment de résistance selon ladite direction de cellule de référence ; et
- **en ce que** les positions desdits premier et quatrième segments de résistance selon ladite direction de cellule de référence sont telles que leur longueur totale, prise selon ladite direction de cellule de référence, dépasse au plus 10 % de la longueur du seul premier ou quatrième segment de résistance ; et
- **en ce que** les positions desdits deuxième et troisième segments de résistance selon ladite direction de cellule d'échantillon sont telles que leur longueur totale, prise selon ladite direction de cellule d'échantillon, dépasse au plus 10 % de la longueur du seul deuxième ou troisième segment de résistance.

2. Détecteur selon la revendication 1, **caractérisé en ce que** lesdites première et quatrième résistances ($R_1$, $R_4$) sont définies sur une même membrane diélectrique suspendue et interdigitées et **en ce que** lesdites deuxième et troisième résistances ($R_2$, $R_3$) sont définies sur une même membrane diélectrique suspendue et interdigitée.

3. Détecteur selon la revendication 1, **caractérisé en ce que** lesdites première et quatrième résistances ($R_1$, $R_4$) sont superposées sur deux couches différentes de métallisation et isolées électriquement au moyen d'une couche de passivation et **en ce que** lesdites deuxième et troisième résistances ($R_2$, $R_3$) sont superposées sur deux couches différentes de métallisation et isolées électriquement au moyen d'une couche de passivation.

4. Procédé d'analyse par chromatographie gazeuse (GC) rapide d'un échantillon de gaz composé d'un gaz porteur mélangé à un composant d'échantillon élué, **caractérisé en ce que** le détecteur de l'une quelconque des revendications 1 à 3 est utilisé et **en ce que** les étapes suivantes sont exécutées :

A. sélection de l'échantillon de gaz ;
B. fourniture, au détecteur de l'une quelconque des revendications 1 à 3, de premier, deuxième, troisième, quatrième segments de résistance (Ri, $R_2$, $R_3$, $R_4$) tels que la longueur totale des premier et quatrième segments selon ladite direction de cellule de référence et la longueur totale des deuxième et troisième segments selon ladite direction de cellule d'échantillon soit inférieure à la longueur d'un paquet de gaz de l'échantillon de gaz ;
C. envoi dudit échantillon de gaz dans le détecteur ;
D. mesure de la conductivité thermique de l'échantillon de gaz.

Fig. 1

Fig. 2

Fig. 3

1 = BRIDGE NEGATIVE SUPPLY
2 = BRIDGE POSITIVE SUPPLY
3 = BRIDGE NEGATIVE MEASUREMENT
4 = BRIDGE POSITIVE MEASUREMENT

Reference branch

Analytical branch

ANALYTICAL
BRANCH

R 1      R 2

VB

R 3      R 4

REFERENCE
BRANCH

RESISTOR R3

HOLES

RESISTOR R2

DIELECTRIC
MEMBRANE

Fig. 4

RESISTOR R3

HOLES

RESISTOR R2

DIELECTRIC
MEMBRANE

Fig. 5

Column outlet

LR

LV

LR

LT

OK.

TCD signal

A

B

Peaks correctly separated

Time

Fig. 6

Column outlet

TCD channel

**A+B**

**A**

**B**

TCD signal

time

**Artifacts introduced:**
a) peaks are detected two times
b) peaks are partially superimposed

Note that these artifacts are
introduced by the detector!

# Fig. 7

Column outlet

TCD channel

**A**

**B**

TCD signal

time

**OK!**

The peaks are correctly
separated.

Furthermore, the signal is
higher, since the sample
works on both resistors
simultaneously.

# Fig. 8

1) silicon chip
2) dielectric membrane
3) resistor $R_2$
4) passivation layer
5) resistor $R_3$
6) Pyrex cover

Fig. 9

$L_T \leq L_R + L_R/10$

$L_R$

REFERENCE
BRANCH

$L_D$

$L_T = 700\mu m$

$L_R = 660\mu m$

$L_D = 1150\mu m$

ANALYTICAL
BRANCH

$L_R$

$L_T \leq L_R + L_R/10$

Fig. 10

18

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- TW 494233
- US 20100242573 A1

### Non-patent literature cited in the description

- **H.A. DAYNES.** Gas Analysis by Measurement of Thermal Conductivity. Cambridge University Press, 1933, 1-302
- **W.A. WISEMAN.** Katharometer behavior. *Ann. N.Y. Acad. Sci.,* 1959, vol. 72, 685-697
- **D.M. ROSIE.** Quantization of thermal conductivity detectors. *J.Chromatogr. Sci.,* 1973, vol. 11, 237-250
- **J. SEVCIK.** Detectors in gas chromatography. *J. Chromatogr. Library,* 1976, vol. 4, 39-58
- **Y. HUANG ; H.H. BAU.** The effects of forced convection on the power dissipation of constant-temperature thermal conductivity sensors. *ASME J. Heat Transfer,* 1997, vol. 119, 30-37
- **S.C. TERRY ; J.H. JERMAN ; J.B. ANGELL.** A gas chromatographic air analyzer fabricated on a silicon wafer. *IEEE Trans. Electr. Devices ED,* 1979, vol. 26 (12), 1880-1886
- **WU Y E ; CHEN K ; CHEN C W ; HSU K H.** Fabrication and characterization of thermal conductivity detectors (TCDs) of different flow channel and heater designs. *Sensors & Actuators A,* 2002, vol. 100, 37-45
- **CRUZ D ; CHANG J P ; SHOWALTER S K ; GELBRAD F ; MANGINELL R P ; BLAIN M G.** Microfabricated thermal conductivity detector for the micro-ChemLab. *Sensors & Actuators B,* 2007, vol. 121, 414-422
- **J. A. DZIUBAN ; J. MROZ ; M. SZCZYGIELSKA ; A. GORECKA-DRZAZGA ; R. WALCZAK ; W. BULA ; D. ZALEWZKI ; L. NIERADKO ; J. LYSKO ; J. KOSZUR.** Portable gas chromatograph with integrated components. *Sensors & Actuators A,* 2004, vol. 115, 318-330
- **B. C. KAANTA ; H. CHEN ; X. ZHANG.** Effect of forced convection on thermal distribution in micro thermal conductivity detectors. *J. Micromech. Microeng,* 2011, vol. 21, 1-8
- **V. R. REID ; R. E. SYNOVEC.** High-speed gas chromatography: The importance of instrumentation optimization and the elimination of extra-column band broadening. *Talanta,* 2008, vol. 76, 703-717